(19) Europäisches Patentamt
European Patent Office
Office européen des brevets

(11) EP 1 793 485 A2

# (12) EUROPÄISCHE PATENTANMELDUNG

(43) Veröffentlichungstag:
**06.06.2007 Patentblatt 2007/23**

(51) Int Cl.:
***H02M 7/5387*** *(2007.01)*

(21) Anmeldenummer: **06023397.0**

(22) Anmeldetag: **10.11.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **02.12.2005 DE 102005057719**
**22.12.2005 DE 102005061388**

(71) Anmelder: **Dr. Johannes Heidenhain GmbH**
**83301 Traunreut (DE)**

(72) Erfinder:
- **Huber, Norbert**
  **83317 Teisendorf (DE)**
- **Ritz, Franz**
  **83236 Übersee (DE)**
- **Lengenfelder, Hans**
  **84453 Mühldorf (DE)**

## (54) Pulsweitenmodulationsverfahren

(57) Es wird ein Verfahren zur pulsweitenmodulierten Ansteuerung von Schaltelementen (T) in einem Umrichter mit N Phasen (U, V, W) beschrieben, bei dem für jede Phase (U, V, W) aus je einer P - periodischen Steuerspannung (Us', Vs', Ws') Ansteuerpulse der Schaltelemente (T) abgeleitet werden. Die P - periodischen Steuerspannungen (Us', Vs', Ws') entsprechen einer Überlagerung von um 360 / N Grad gegeneinander verschobenen sinusförmigen Steuerspannungen (Us, Vs, Ws) der Periode P mit einer für alle Phasen (U, V, W) geltenden N*P - periodischen Offsetspannung (Uy). Die Offsetspannung (Uy) wird dabei so gewählt, dass zu jeder Zeit genau eine der P - periodischen Steuerspannungen (Us', Vs', Ws') für die Ableitung der Schaltimpulse wirksam auf einer Aussteuergrenze (+A, -A) liegt. Mit diesem Verfahren wird die Anregung von Resonanzen am Sternpunkt (S) einer angeschlossenen Last (L) deutlich reduziert.

FIG. 4b

Us'
Vs'
Ws'

EP 1 793 485 A2

Printed by Jouve, 75001 PARIS (FR)

## Beschreibung

Die Erfindung betrifft Pulsweitenmodulationsverfahren, mit denen sich die Anregung von Resonanzen in einem mehrphasigen System aus Netz, Umrichter und Motor vermindern lassen.

Ohne moderne, elektronisch kommutierte Antriebe kommt heute kaum noch ein Gebiet der Technik aus. Es findet daher ein ständiger Entwicklungsprozess statt, um solche Antriebe noch leistungsfähiger auszuführen und dabei für immer weitere Anwendungen tauglich zu machen. So setzen sich z.B. in vielen Bereichen immer mehr so genannte Direktantriebe durch, deren Drehmoment ohne eine Übersetzung unmittelbar auf die gewünschte Anwendung übertragen wird. Solche Direktantriebe stehen bereits für sehr hohe Drehmomente, bzw. als Lineardirektantriebe für sehr hohe Kräfte zur Verfügung.

Bedingt durch den Aufbau solcher Direktantriebe, wie er beispielsweise in der EP 793870 B1 beschrieben ist, spielen die Induktivitäten von vielen in Reihe geschalteten Spulen und parasitäre Kapazitäten im Antrieb eine immer größere Rolle. In Verbindung mit einem Umrichter zur Versorgung des Antriebs mit Energie entstehen schwingungsfähige Systeme mit relativ niedrigen Resonanzfrequenzen im Bereich einiger 10 kHz.

Durch die im Umrichter vorgenommen Schaltvorgänge im rückspeisefähigen Gleichrichter und im Wechselrichter springt die Spannung am Sternpunkt einer angeschlossenen mehrphasigen Last gegenüber Erde. Dabei werden unter Umständen die Resonanzfrequenzen angeregt. Es wurde bereits beobachtet, dass in Verbindung mit einem solchen Umrichter an Direktantrieben mit besonders niedrigen Resonanzfrequenzen Schwingungen auftraten, die zur Zerstörung des Antriebs führten. Es traten dabei am Sternpunkt des Antriebs so hohe Spannungen auf, dass durch Teilentladung die Isolation des Sternpunkts gegen Masse zerstört wurde.

Zur Vermeidung solcher Probleme sind bereits verschiedene Ansätze bekannt geworden. Ihnen gemeinsam ist, dass die unerwünschten Resonanzschwingungen gedämpft werden. Dabei wird entweder direkt im Antrieb oder im Umrichter angesetzt.

So beschreibt die DE20311104U eine in den Zwischenkreis eingeschleifte stromkompensierte Drossel. Diese verringert die Anregung der störenden Resonanzen. Nachteilig an dieser Lösungen ist der zusätzlich Aufwand an recht großen und teuren Bauteilen im Umrichter.

In einem anderen Zusammenhang sind bereits Pulsweitenmodulationsverfahren bekannt, bei denen den periodischen Steuerspannungen für die Phasen der angeschlossenen Last eine für alle Phasen gleiche periodische Spannung mit dreifacher Periode aufgeschaltet wird. Die Spannung der Phasen relativ zueinander ändert sich dadurch nicht. Zur Vermeidung von Schaltverlusten im Umrichter ist es außerdem bekannt, einzelne Schaltelemente im Umrichter zeitweise nicht zu schalten.

Aufgabe der Erfindung ist es, ein Pulsweitenmodulationsverfahren anzugeben, mit dem die Anregung von Resonanzen am Sternpunkt einer angeschlossenen Last gegenüber dem Stand der Technik reduziert wird.

Diese Aufgabe wird gelöst durch ein Pulsweitenmodulationsverfahren nach Anspruch 1. Vorteilhafte Details des Verfahrens ergeben sich aus den von Anspruch 1 abhängigen Ansprüchen.

Es wird ein Verfahren zur pulsweitenmodulierten Ansteuerung von Schaltelementen in einem Umrichter mit N Phasen beschrieben, bei dem für jede Phase aus je einer P - periodischen Steuerspannung Ansteuerpulse der Schaltelemente abgeleitet werden. Die P - periodischen Steuerspannungen entsprechen einer Überlagerung von um 360 / N Grad gegeneinander verschobenen sinusförmigen Steuerspannungen der Periode P mit einer für alle Phasen geltenden N*P - periodischen Offsetspannung. Die Offsetspannung wird dabei so gewählt, dass zu jeder Zeit genau eine der P - periodischen Steuerspannungen für die Ableitung der Schaltimpulse wirksam auf einer Aussteuergrenze liegt.

Zur Umsetzung dieses Verfahrens genügen im Falle von analog gesteuerten Umrichtern einfache und kostengünstige Logikbausteine, um eine entsprechende Ansteuerlogik aufzubauen, für digital angesteuerte Umrichter reduziert sich der Aufwand zur Umsetzung des Verfahrens auf eine Softwareänderung.

Je nach dem, ob mit dem neuen Pulsweitenmodulationsverfahren ein rückspeisefähiger Gleichrichter betrieben werden soll, mit dem Energie aus dem Zwischenkreis eines Umrichters zurück in das Versorgungsnetz gespeist werden kann, oder ein Wechselrichter, der die Gleichspannung des Zwischenkreises in eine mehrphasige Wechselspannung zum Betreiben einer Last (insbesondere eines Motors) umwandeln soll, können unterschiedliche Ausgestaltungen des Pulsweitenmodulationsverfahrens vorteilhaft sein. Einzelheiten der vorliegenden Erfindung werden daher im Rahmen der nachfolgenden Beschreibung von je einer Ausführungsform für diese beiden Anwendungsfälle anhand der Figuren beschrieben. Dabei zeigen

Figur 1 einen Wechselrichter mit angeschlossener Last,

Figur 2 ein Verfahren zur Gewinnung von herkömmlichen PWM-Signalen,

Figur 3 mehrere mögliche Schaltungszustände der Last,

Figur 4a, b ein erstes Verfahren zur Gewinnung von verbesserten PWM-Signalen,

Figur 5 a, b ein zweites Verfahren zur Gewinnung von verbesserten PWM-Signalen.

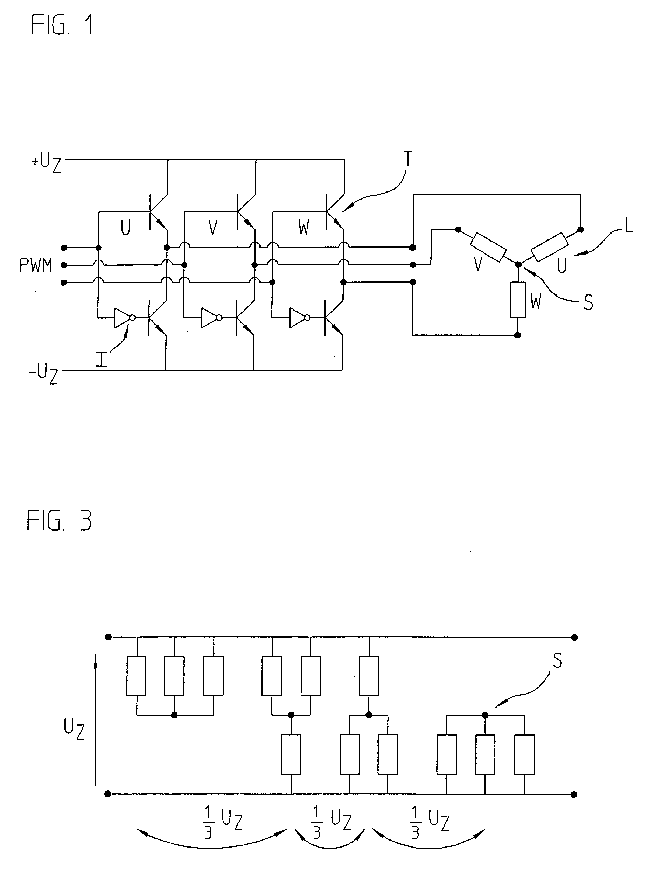

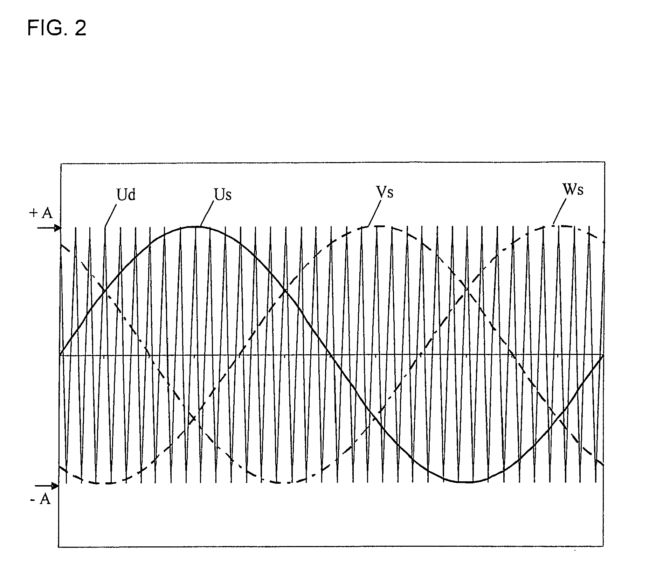

Figur 1 zeigt in der linken Hälfte einen Wechselrichter, in der rechten Hälfte eine an den Wechselrichter angeschlossene Last L mit drei Phasen U, V, W. Bei der Last L kann es sich um einen Motor handeln, der aus einem Zwischenkreis, dessen Gleichspannungspotentiale bei +Uz und -Uz liegen, mit Wechselspannung versorgt wird. Die folgenden Betrachtungen gelten aber auch wenn die Last L das Versorgungsnetz ist, in das Energie aus dem Zwischenkreis zurückgespeist werden soll, etwa weil beim Bremsen eines Motors Energie anfällt. Auch durch die Ansteuerung eines solchen rückspeisefähigen Gleichrichters kann eine Anregung der Resonanzen in dem am Umrichter angeschlossenen Motor erfolgen.

Je zwei Schaltelemente T verbinden jede Phase U, V, W der Last L entweder mit +Uz oder -Uz des Zwischenkreises. Es sind daher im Wechselrichter sechs Schaltelemente T vorhanden. Üblicherweise finden hier Leistungstransistoren wie IGBTs Anwendung.

Zur Ansteuerung der Schaltelemente T dienen Schaltimpulse in Form von drei PWM-Signalen, die als logische Rechtecksignale je eine der drei Phasen ansteuern. Jeweils ein Schaltelement T wird unmittelbar durch sein zugeordnetes PWM-Signal gesteuert, das jeweils korrespondierende Schaltelement über einen zwischengeschalteten Invertierer I. Jede Brücke aus zwei Schaltelementen T hat zwei mögliche Zustände, in denen eines der beiden Schaltelemente T durchgeschaltet ist, das andere aber sperrt. Damit wird jede Phase U, V, W der Last entweder auf +Uz oder -Uz gelegt.

Für die an sich bekannte Ableitung der PWM-Signale aus periodischen Steuerspannungen sei kurz anhand der Figur 2 ein bekanntes Verfahren erläutert. Es werden 3 Steuerspannungen Us, Vs, Ws betrachtet, deren Frequenz und Amplitude der an den drei Phasen U, V, W der Last L gewünschten Spannung entspricht. Ziel ist es, mit Hilfe von pulsweitenmodulierten Rechteckspannungen die Steuerspannungen Us, Vs, Ws anzunähern. Eine Möglichkeit, dies zu erreichen besteht darin, diese 3 Steuerspannungen Us, Vs, Ws jeweils mit einer Dreieckspannung Ud konstanter Frequenz und konstanter Amplitude zu vergleichen: Je nachdem, ob die jeweilige Steuerspannung Us, Vs, Ws ober- oder unterhalb der Dreieckspannung Ud liegt, wird das zugehörige PWM-Signal in den einen oder anderen logischen Zustand geschaltet. Die Frequenz der Dreieckspannung Ud ist dabei erheblich höher als die der Steuerspannungen Us, Vs, Ws. Typischerweise beträgt die lastseitige Frequenz 50 oder 60 Hertz in einem Versorgungsnetz, bei einem Motor hängt die lastseitige Frequenz, und damit die Frequenz der Steuerspannungen von der (elektrischen) Drehzahl des Motors ab. Die Frequenz der Dreieckspannung (auch als PWM-Frequenz bezeichnet) liegt demgegenüber in einem Bereich von mehreren Kilohertz, z.B. 5 - 10 kHz.

Die Amplitude der Dreieckspannung Ud definiert die Aussteuergrenze +A, -A für die Steuerspannungen Us, Vs, Ws. Steuerspannungen Us, Vs, Ws, die höher liegen als diese Aussteuergrenze, können durch das PWM - Verfahren nicht in die entsprechenden Spannungen in den Phasen U, V, W der Last L umgesetzt werden.

Ein anderes bekanntes Verfahren zum Erzeugen der PWM-Signale ist beispielsweise die Raum-Zeiger-Modulation.

Figur 3 zeigt verschiedene mögliche Schaltzustände der einzelnen, sternförmig verbundenen Phasen U, V, W der Last L. Betrachtet man die am Sternpunkt S anliegende Spannung, so erkennt man, dass diese um je 1/3*Uz zwischen zwei benachbarten Schaltzuständen springt.

Je nach dem, wie viele Schaltelemente T gleichzeitig schalten (möglich sind zwei, vier oder sechs) kann sich die Spannung am Sternpunkt S in Sprüngen von 1/3*Uz, 2/3*Uz oder 3/3*Uz ändern. Je höher der Spannungssprung am Sternpunkt S ist, desto stärker werden unerwünschte Resonanzen angeregt.

Die im Stand der Technik verwendeten Pulsweitenmodulationsverfahren führen zu zahlreichen Sprüngen von 2/3*Uz oder sogar 3/3*Uz. Betrachtet man die Figur 2, so erkennt man, dass an jedem Schnittpunkt von zwei Steuerspannungen Us, Vs, Ws zwangsläufig zwei Schaltelementbrücken gleichzeitig umschalten und dabei Sprünge von 2/3 Uz auftreten. Soll an einen Motor die Spannung 0 V angelegt werden, so liegen alle Steuerkurven aufeinander auf der Nulllinie der Figur 2. Deshalb schalten alle sechs Schaltelemente mit der PWM-Frequenz hin und her, wobei jedes mal ein 3/3*Uz Sprung am Sternpunkt auftritt und damit eine sehr starke Anregung der Resonanzen.

Es soll nun ein erstes Pulsweitenmodulationsverfahren beschrieben werden, das Sprünge um 2/3*Uz ganz vermeidet. Dieses Verfahren ist vor allem für rückspeisefähige Netzumrichter geeignet, da hier der eben beschriebene Fall von einer Sollspannung von konstant 0 V nicht vorkommt, sondern immer die Netzspannung mit der Netzfrequenz anliegt. Sprünge der Zwischenkreisspannung um mehr als 1/3*Uz sind dadurch ausgeschlossen.

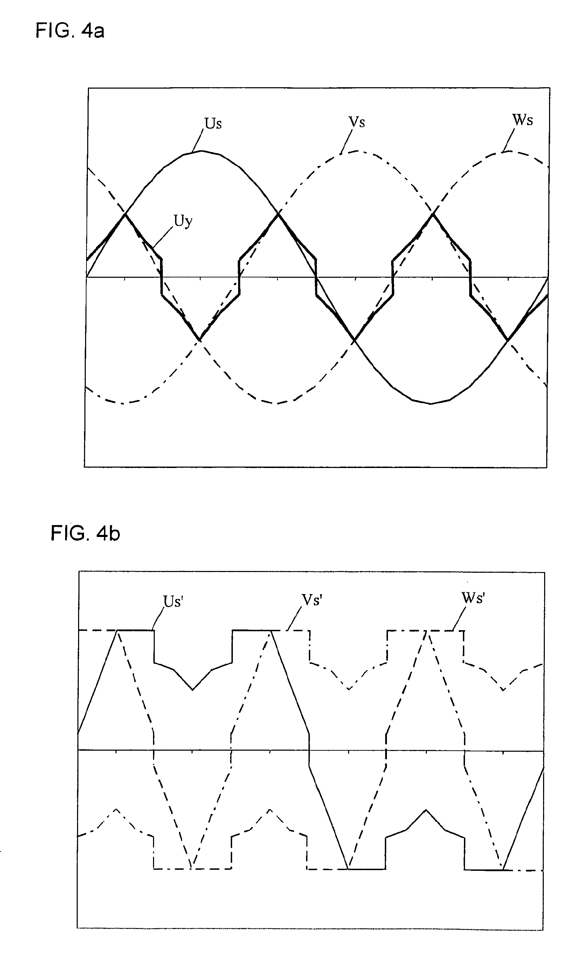

Figur 4a zeigt sinusförmige Steuerspannungen Us, Vs, Ws der Periode P für ein System mit N=3 Phasen. Es ist außerdem eine N*P, also 3*P - periodische Offsetspannung Uy dargestellt, deren Zustandekommen im Folgenden erläutert wird.

Für die in Figur 4b dargestellten, aus der Überlagerung der sinusförmigen Steuerspannungen Us, Vs, Ws mit der Offsetspannung Uy resultierenden Steuerspannungen Us', Vs', Ws' gilt zunächst:

$$Us' = Us + Uy; \qquad Vs' = Vs + Uy; \qquad Ws' = Ws + Uy.$$

Die Offsetspannung Uy wird so gewählt, dass die Überlagerung der Offsetspannung Uy mit jeder der P-periodischen Steuerspannungen Us, Vs, Ws dazu führt, dass zu jeder Zeit genau eine der resultierenden P - periodischen Steuerspannungen Us', Vs', Ws' auf einer Aussteuergrenze der Dreiecksspannung Ud liegt. Die resultierenden Steuerspannungen Us', Vs', Ws' schneiden sich nur noch auf einer Aussteuergrenze +A, -A.

Insbesondere soll jeweils eine resultierende Steuerspannung Us', Vs', Ws' für einen 30 Grad Abschnitt einer 360 Grad Periode P auf einer Aussteuergrenze +A, -A liegen, und zwar je zwei 30-Grad Abschnitte auf der oberen Aussteuergrenze und je zwei 30-Grad Abschnitte auf der unteren Aussteuergrenze. So ergibt sich für die Offsetspannung Uy der Figur 4a:

Im Intervall [0 Grad; 30 Grad[: Uy = A-Ws (Ws' liegt dann auf A)

Im Intervall [30 Grad; 60 Grad[: Uy = A-Us (Us' liegt dann auf A)

Im Intervall [60 Grad; 90 Grad[: Uy = -A-Vs (Vs' liegt dann auf -A)

Im Intervall [90 Grad; 120 Grad[: Uy = -A-Ws (Ws' liegt dann auf -A)

Damit ist die Offsetspannung Uy für das erste Drittel der Periode P definiert, der Verlauf wiederholt sich im zweiten und dritten Drittel, da die Offsetspannung 3*P - periodisch ist.

Figur 4b zeigt die Steuerspannungen Us', Vs', Ws', die aus der Überlagerung der Steuerspannungen Us, Vs, Ws der Figur 4a mit der eben hergeleiteten Offsetspannung Uy resultieren. Da die Offsetspannung Uy jeder der drei sinusförmigen Steuerspannungen Us, Vs, Ws aufgeschaltet wird, ändert sich an der für die Last L entscheidenden Spannungsdifferenz zwischen den Phasen U, V, W nichts, wenn man satt der sinusförmigen Steuerspannungen Us, Vs, Ws der Figur 4a die resultierenden Steuerspannungen Us', Vs', Ws' der Figur 4b verwendet.

Die Offsetspannung Uy ist so gewählt, dass jede der Steuerspannungen Us', Vs', Ws' pro Periode P vier mal für 30 Grad, also eine 1/12 Periode auf der oberen oder unteren Aussteuergrenze +A, -A liegt. Das so ermittelte PWM-Signal ist in diesen Zeiten statisch, bewirkt also für die jeweils zugeordnete Phase U, V, W keine Schaltvorgänge. Die vier konstanten Bereiche liegen je zweimal auf der oberen Aussteuergrenze A und je zweimal auf der unteren Aussteuergrenze -A. Zwischen den konstanten Bereichen liegen jeweils Bereiche, in denen die Steuerspannung zwischen den Extremwerten verläuft und zum Teil sogar springt.

Entscheidend ist nun die Tatsache, dass Schnittpunkte zwischen den Steuerspannungen Us', Vs', Ws' ausschließlich in Bereichen liegen, in denen eine der beiden sich schneidenden Steuerspannungen Us', Vs', Ws' gerade noch konstant ist, und die andere der beiden ab dem Schnittpunkt konstant ist. Anders ausgedrückt liegt vor jedem Schnittpunkt und nach jedem Schnittpunkt ein Bereich, in dem eine der beiden Steuerspannungen Us', Vs', Ws' konstant ist, und zwar hier in einem Bereich von 30 Grad einer Periode. Dies führt dazu, dass niemals zwei Phasen U, V, W der Last L gleichzeitig umgeschaltet werden, und damit zu einer vollständigen Vermeidung von 2/3*Uz - Sprüngen vom Zwischenkreis gegen Erde. Die Anregung von Resonanzen wird dadurch deutlich reduziert.

In Bezug auf die Anregung von Resonanzen ist nicht ausschließlich die Amplitude des Spannungssprunges ausschlaggebend, sondern es kann auch eine Folge von mehreren Sprüngen um 1/3*Uz in gleicher Richtung ebenfalls eine außergewöhnlich hohe Anregung erzeugen, wenn der Abstand der einzelnen Sprünge in den Bereich der Anstiegszeit der Eigenresonanz des Sternpunktes S fällt. Solche aufeinander folgenden Sprünge treten unter Umständen beim Wechsel von einer Steuerspannung Us', Vs', Ws' im Dauerbetrieb zu einer anderen auf. Da zu Beginn eines solchen Übergangs die Pulsweite des PWM-Signals vom Schnittpunkt der Dreieckspannung Ud mit der gerade nicht mehr auf der Aussteuergrenze liegenden Steuerspannung Us', Vs', Ws' schmal ist, lässt sich der erste Folgepuls nach dem Wechsel ohne größere Störung der in der Last L bewirkten Ströme durch eine geeignete Schaltung unterdrücken, was zu einer weiteren Absenkung der Spannungsüberhöhung am Sternpunkt S der Last L führt.

Vorzugsweise wird also der erste auf einen konstanten Bereich einer Steuerspannung Us', Vs', Ws' ohne PWM - Schaltimpulse folgende PWM - Schaltimpuls (also die ersten beiden Umschaltvorgänge der jeweiligen Schaltelementbrücke) unterdrückt.

Wie erwähnt, ist das erste hier beschriebene Pulsweitenmodulationsverfahren nicht zur Ansteuerung einer Last geeignet, bei der eine Sollspannung von 0 V bzw. sehr niedrige Sollspannungen vorkommen, wie es bei einem ruhenden bzw. sehr langsam drehenden Motor vorkommt. Für solche Anwendungen sei daher ein weiteres Pulsweitenmodulationsverfahren beschrieben, das sich für solche Zwecke eignet.

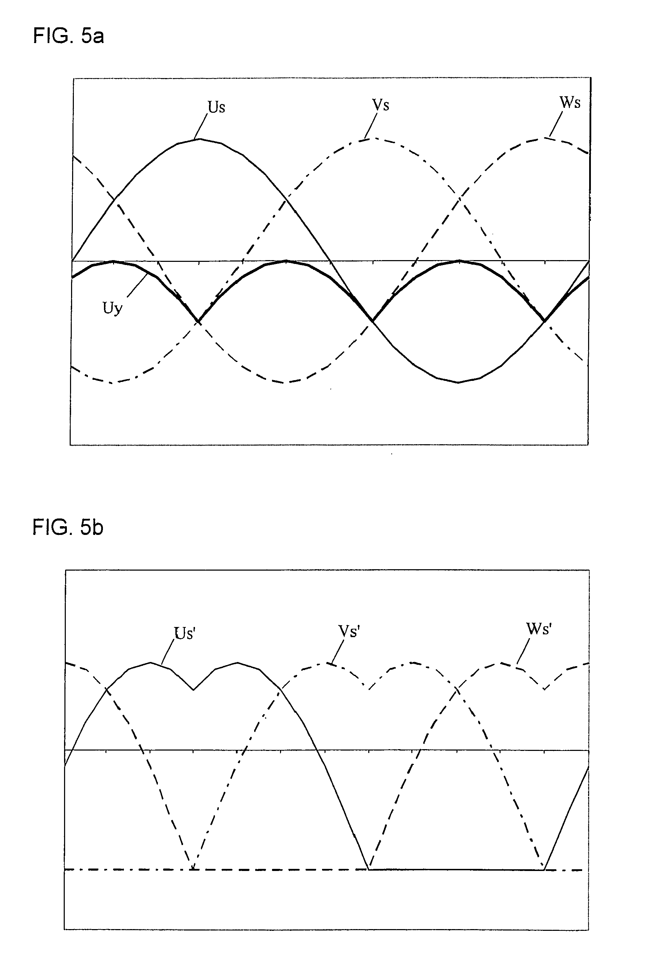

Figur 5a zeigt wieder sinusförmige, P-periodische Steuerspannungen Us, Vs, Ws, sowie eine (für 3 Phasen) 3*P-periodische Offsetspannung Uy. Die Herleitung dieser Offsetspannung Uy sei im Folgenden erläutert.

Die Bedingung für die aus der Überlagerung der sinusförmigen Steuerspannungen Us, Vs, Ws mit der Offsetspannung Uy resultierenden Steuerspannungen Us', Vs', Ws' ist wie im ersten Ausführungsbeispiel, dass zu jeder Zeit genau eine der P - periodischen Steuerspannungen Us', Vs', Ws' auf einer Aussteuergrenze +A, -A der Dreiecksspannung (Ud) liegt.

In diesem Ausführungsbeispiel erstrecken sich die Bereiche, die konstant auf der Aussteuergrenze +A, -A liegen, über jeweils 120 Grad, so dass pro Periode P jede resultierende Steuerspannung Us', Vs', Ws' einmal für 120 Grad auf einer Aussteuergrenze +A, -A liegt.

Außerdem ist die 3*P-periodische Offsetspannung Uy so gewählt, dass die resultierenden Steuerspannungen jeweils nur auf einer der beiden, im Beispiel auf der unteren, negativen Aussteuergrenze -A liegen.

Aus diesen Randbedingungen ergeben sich für die Offsetspannung Uy folgende Bestimmungsgleichungen:

Im Intervall [0 Grad; 90 Grad[: Uy = -A-Vs (Vs' liegt dann auf -A)

Im Intervall [90 Grad; 210 Grad[: Uy = -A-Ws (Ws' liegt dann auf -A)

Im Intervall [210 Grad; 330 Grad[: Uy = -A-Us (Us' liegt dann auf -A)

Im Intervall [330 Grad; 360 Grad[: Uy = -A-Vs (Vs' liegt dann auf -A)

Das erste und letzte Intervall dieser Auflistung ergänzen sich zu einem Bereich von 120 Grad, in dem Ws' konstant auf der unteren, negativen Aussteuergrenze -A liegt. Uy ist also auch hier 3*P - periodisch.

Auch diese Form der resultierenden Steuerspannungen Us', Vs', Ws' reduziert die Anzahl der 2/3*Uz - Sprünge, da zumindest ein Teil der Schnittpunkte zwischen den Steuerspannungen Us', Vs', Ws' auf der Aussteuergrenze +A, -A liegen. Sprünge um 3/3*Uz werden vollständig vermieden. Besonders vorteilhaft ist dieses Verfahren jedoch, wenn ein stehender oder nur sehr langsam drehender Motor als Last L angesteuert werden soll. Alle Steuerspannungen Us', Vs' Ws' liegen in diesem Fall auf der unteren Aussteuergrenze -A, es treten gar keine Schaltvorgänge mehr auf.

Das erste Ausführungsbeispiel eignet sich also vor allem für den rückspeisefähigen Gleichrichter, der in einem Umrichter zur Ansteuerung eines Motors die Netzspannung für den Zwischenkreis gleichrichtet, sowie bei Bedarf Energie aus dem Zwischenkreis des Umrichters ins Netz zurückspeisen kann. Die Last L in Figur 1 stellt das Netz dar. Da hier die Steuerspannungen Us', Vs', Ws' immer dem Netz folgen, gibt es weder 2/3*Uz - Sprünge noch 3/3*Uz Sprünge. Da die Steuerspannung Us', Vs', Ws' abwechselnd auf der oberen und unteren Aussteuergrenze verharren, werden die Schaltelemente T im Mittel gleich stark belastet.

Das zweite Ausführungsbeispiel eignet sich dagegen für den Wechselrichter, der in einem Umrichter aus der Gleichspannung des Zwischenkreises eine Wechselspannung beliebiger Frequenz und Amplitude zur Ansteuerung der Motorphasen U, V, W erzeugt. Die Last L in Figur 1 stellt hier den Motor dar. Bei Stillstand des Motors treten weder 2/3*Uz noch 3/3*Uz Sprünge auf. Dreht sich der Motor, ist die Anzahl der 2/3*Uz Sprünge im Vergleich zum Stand der Technik reduziert. Das Verfahren gemäß dem zweiten Ausführungsbeispiel ist daher trotz einer ungleichmäßigen Belastung der Schaltelemente T dem Verfahren gemäß erstem Ausführungsbeispiel in diesem Anwendungsfall vorzuziehen ist.

In beiden Ausführungsbeispielen wird die Anzahl der Schaltvorgänge der Schaltelemente T auf ungefähr 2/3 des Wertes bei herkömmlicher, sinusförmiger Steuerspannung reduziert, und damit entsprechend auch die Anregung von unerwünschten Resonanzen. Da damit aber auch die Welligkeit der in den Phasen U, V, W erzeugten Ströme um einen Faktor 1.5 ansteigt, muss die PWM - Frequenz, also die Frequenz der Dreieckspannung Ud ebenfalls etwa um diesen Faktor 1.5 angehoben werden, um diese Welligkeit zu kompensieren.

Es sei an dieser Stelle noch erwähnt, dass zu bestimmten Zeitpunkten auch zwei resultierende Steuerspannungen Us', Vs', Ws' auf einer Aussteuergrenze +A, -A liegen können, nämlich dann, wenn eine der Steuerspannungen gerade noch auf der Aussteuergrenze liegt und die andere Steuerspannung gerade an der Aussteuergrenze ankommt. Im Rahmen der Genauigkeit, die für die Generierung solcher Steuerspannungen Us', Vs', Ws' überhaupt möglich ist, kann dieser überlappende Zustand sogar für eine kurze Zeitspanne anhalten. Entscheidend ist, dass diese Zeitspanne klein ist im Vergleich zur Periodendauer der Dreiecksspannung Ud, denn dann spielen solche kurzen Überlappungen keine Rolle bei der Bildung bzw. Ableitung der PWM-Signale. Der in der Beschreibung und in den Ansprüchen verwendete Ausdruck "zu jeder Zeit genau eine" soll also so verstanden werden, dass niemals eine für die Bildung der PWM-Signale wirksame Überlappung von resultierenden Steuerspannungen Us', Vs', Ws' auf einer Aussteuergrenze +A, -A auftritt.

**Patentansprüche**

1. Verfahren zur pulsweitenmodulierten Ansteuerung von Schaltelementen (T) in einem Umrichter mit N Phasen (U, V, W), bei dem für jede Phase (U, V, W) aus je einer P - periodischen Steuerspannung (Us', Vs', Ws') die Schaltimpulse der Schaltelemente (T) abgeleitet werden, und bei dem die P - periodischen Steuerspannungen (Us', Vs', Ws') einer Überlagerung von um 360 / N Grad gegeneinander verschobenen sinusförmigen Steuerspannungen (Us, Vs, Ws) der Periode P mit einer für alle Phasen (U, V, W) geltenden N*P - periodischen Offsetspannung (Uy) entsprechen, **dadurch gekennzeichnet, dass** die Offsetspannung (Uy) so gewählt wird, dass zu jeder Zeit genau eine der P - periodischen Steuerspannungen (Us', Vs', Ws') für die Ableitung der Schaltimpulse wirksam auf einer Aussteuergrenze (+A, -A) liegt.

2. Verfahren nach Anspruch 1, **dadurch gekennzeichnet, dass** während einer Periode P jede resultierende Steuerspannung (Us', Vs', Ws') wenigstens einmal in einem Bereich konstant auf der oberen oder unteren Aussteuergrenze (+A, -A) liegt.

3. Verfahren nach Anspruch 1, **dadurch gekennzeichnet, dass** jede der resultierenden Steuerspannungen (Us', Vs', Ws') während einer Periode P von 360 Grad für je zwei Bereiche von 30 Grad konstant auf der oberen Aussteuergrenze (+A) und für je zwei Bereiche von 30 Grad konstant auf der unteren Aussteuergrenze (-A) liegt.

4. Verfahren nach Anspruch 1, **dadurch gekennzeichnet, dass** jede der resultierenden Steuerspannungen (Us', Vs', Ws') während einer Periode P von 360 Grad je einen Bereich von 120 Grad konstant auf der oberen Aussteuergrenze (A) oder unteren Aussteuergrenze (-A) liegt.

5. Verfahren nach Anspruch 4, **dadurch gekennzeichnet, dass** alle konstanten Bereiche der resultierenden Steuerspannungen (Us', Vs', Ws') entweder auf der oberen Aussteuergrenze (A) oder unteren Aussteuergrenze (-A) liegen.

6. Verfahren nach einem der vorhergehenden Ansprüche **dadurch gekennzeichnet, dass** ein auf einen konstanten Bereich ohne Schaltimpulse folgender erster Schaltimpuls unterdrückt wird.

FIG. 1

+UZ
T
U
V
W
PWM
L
V
U
S
W
I
-UZ

FIG. 3

S
UZ
1/3 UZ
1/3 UZ
1/3 UZ

FIG. 2

Ud
Us
Vs
Ws
+ A
- A

FIG. 4a

Us
Vs
Ws
Uy

FIG. 4b

Us'
Vs'
Ws'

FIG. 5a

Us
Vs
Ws
Uy

FIG. 5b

Us'
Vs'
Ws'

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 793870 B1
- DE 20311104 U